# EUROPEAN PATENT SPECIFICATION

(11) **EP 0 469 290 B1**
(45) Date of publication and mention of the grant of the patent: **13.04.1994**
(21) Application number: 91110469.3
(22) Date of filing: 25.06.1991
(51) Int. Cl.: F16B 13/04, F16B 13/00

(54) **Threaded insert for use on a drywall**
Einsatzteil mit Gewinde für die Anwendung an einer Trockenmauer
Insert avec filetage à utiliser en maçonnerie sèche

(30) Priority: 26.06.1990 US 543333
(43) Date of publication of application: 05.02.1992
(73) Proprietor: Chern, Tsun-Ping, Hua Tan Hsiang, Changhua (TW)
(72) Inventor: Chern, Tsun-Ping, Hua Tan Hsiang, Changhua (TW)
(74) Representative: Tiedtke, Harro, Dipl.-Ing.

(56) References cited:
- EP-B- 0 165 674
- DE-A- 2 850 123
- DE-A- 3 108 010
- DE-A- 3 346 704
- DE-B- 1 225 529
- GB-A- 231 155
- US-A- 126 366

## Description

### Background of the Present Invention

The present invention relates to threaded inserts, and more particularly to a structure of a threaded insert for use on drywalls or sheetrock.

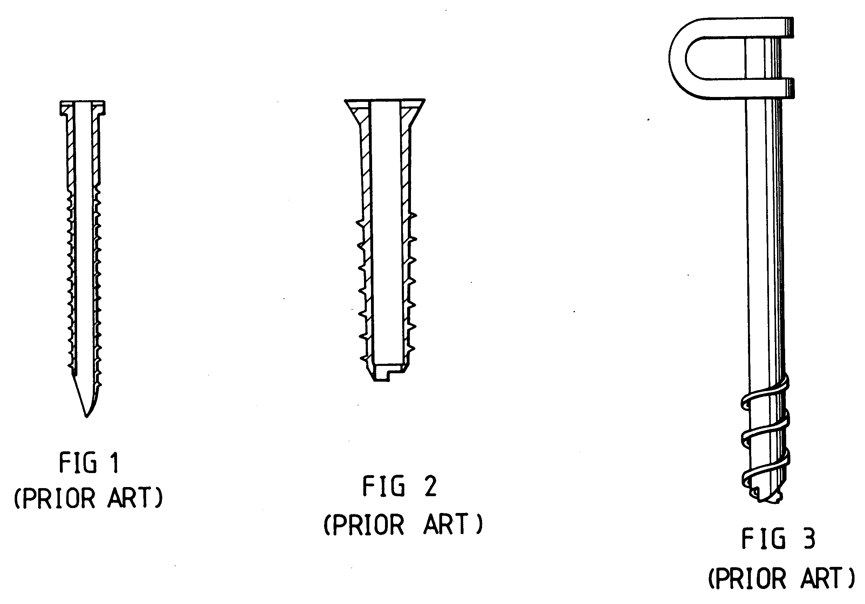

Threaded inserts suitable for use on friable wall materials are known in the prior art with particular reference to US-A- 126,366 to Wills (Apr. 1872), GB-A- 231,155 to Karna (Jun. 1925), and DE-B- 1,225,529 to Sticht (Sep. 1966). The embodiments of the above mentioned prior art references are shown respectively in Figs. 1 to 3.

While all of the threaded inserts as disclosed in the above references have an axial bore and cutting surfaces formed on an end thereof, enabling them to be drilled into the material of a wall, and have external threads that would tap into the wall and secure the threaded insert therewith, none of them provide a means for securing a threaded fastener such as a screw within the bore of the threaded insert. Moreover, due to the form of their cutting surfaces a solid slug of material would remain in the bore prohibiting the insertion of a screw therein.

In a more recent threaded insert as disclosed in EP-A- 0,165,674 to Ernst et al, (Jul. 1986) as shown in Figs. 4 and 5, a suitably shaped drilling bit thereon bores out the wall material which is evacuated through the bore therein, and a means for securing a screw therein is provided.

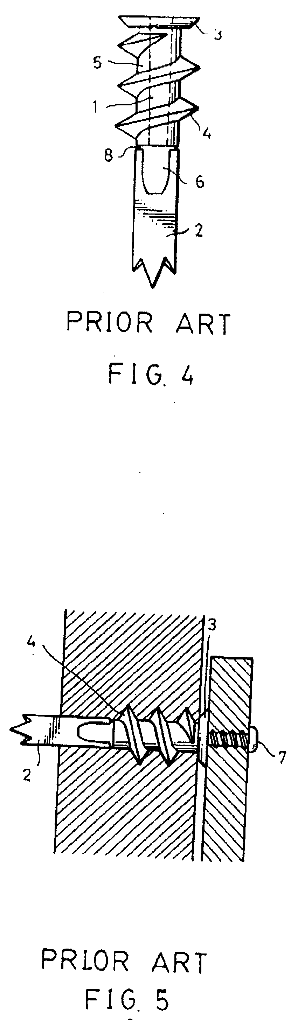

Referring to Fig. 4, a self-drilling threaded insert for use on drywalls comprises a cylindrical body 1, a flat drilling bit 2 formed on the front end of body 1 with three pointed spikes formed on the extreme end thereof, a flange 3 formed on the rear end of body 1, a thread 4 formed around the outer periphery of body 1, a fluted bore 5 extending axially through body 1, and a roughly spoon shaped opening 6 formed on the base of drilling bit 2 and in communication with bore 5.

Fig. 5 shows the self-drilling threaded insert with a screw 7 inserted through bore 5 therein, and tapping into the fluted inner wall thereof. The tip of screw 7 abuts spoon shaped opening 6 and causes drilling bit 2 to deflect laterally as the juncture of bit 2 with body 1 has been purposely weakened during manufacture by a pair of notches 8.

This type of conventional threaded insert has several disadvantages which are enumerated hereunder.
1) As the drilling bit 2 has a comparable length with that of body 1, chips generated at the extreme end of the drilling bit 2 by the drilling procedure have a relatively long distance to travel before reaching bore 5, which often leads to clogging therein.
2) The long and flat drilling bit 2 develops a relatively large resistance force when being turned in the drilled out hole filled with chips generated therein, and hence requires a relatively large torque to drive therein.
3) Also as a result of the length of drilling bit 2, the threaded insert may easily divert from the intended direction of travel during the drilling procedure.
4) As was mentioned above, the juncture of drilling bit 2 with body 1 has been purposely weakened during manufacture. However, this can often result in the premature breakage of drilling bit 2 during the drilling procedure, especially when drilling a wall material of relatively greater hardness.
5) If the threaded insert is used on a wall of a thickness greater than the length of the insert, the drilling bit 2 would remain embedded in the wall. A screw that is to be subsequently inserted into the insert would have difficulty in deflecting the drilling bit 2 and hence could not be fully inserted therein.

The self-drilling threaded insert of the present invention, however, overcomes the deficiencies of the self-drilling threaded insert described above, as taught by Ernst et al, by providing a threaded insert with a pair of relatively short conical arc shaped cutting bits frangibly joined at the tip thereof which overcomes the problems associated with the long flat drilling bit of the threaded insert described above. A detailed description of the form and structure of the self-drilling threaded insert of the present invention is given below.

### Summary of the Present Invention

The threaded insert for use on drywalls has a first object the invention to provide a self-drilling insert that has a sturdy structure and is resistant to clogging, and a second object of the invention to provide a self-drilling insert that has increased pull-out resistance.

The threaded insert of the present invention comprises a generally cylindrical body with a high thread and a low thread formed around the outer periphery of the cylindrical body, a flange formed on the rear and of the cylindrical body, a fluted and partially tapered bore formed through the axis of the cylindrical body, and a pair of congruent drilling bits with the shape of a conical arc sector formed on the front end of the cylindrical body and meeting at a common apex to form a tip.

The threaded insert can be drilled into a drywall with a manual or powered screwdriver with the chips created thereby passing through the spaces between the drilling bits and through the axial bore of the insert which is separated from the tip of the drilling bits by only a small distance.

The high and low threads around the outer periphery of the cylindrical body tap into the drywall when the insert is drilled into the drywall with the low thread augmenting the pull-out resistance of the insert provided by the high thread.

The axial bore has a tapered rear section that is widest at the rear entrance thereof adjacent to the flange and narrowest at a position slightly forward of the midpoint of the threaded insert, after which the taper section adjoins with a linear section of equal width extending to the front entrance of the bore.

After the drilling procedure has been completed and the flange of the insert abuts the drywall, a screw can be inserted into the insert with the thread thereon tapping the fluted inner wall of the linear section of the bore.

The tip of the screw can be inserted pass the position of the cutting bits causing them to separate at the tip and diverge laterally, embedding into to the drywall to further strengthen the bond between the insert and drywall.

As is readily apparent from the above, the first and second objectives of the present invention are obtained.

### A Brief Description of the Drawings

Fig. 1 is a sectional view of a first type of conventional self-drilling threaded insert of the prior art.

Fig. 2 is a sectional view of a second type of conventional self-drilling threaded insert of the prior art.

Fig. 3 is a side view of a third type of conventional self-drilling threaded insert of the prior art.

Fig. 4 is a perspective view of a fourth type of conventional self-drilling threaded insert of the prior art.

Fig. 5 is a side view showing a fourth type of conventional self drilling threaded insert, embedded into a drywall and with a screw inserted therein, securing a partition board therebetween.

Fig. 6 is a perspective view of an embodiment of the self-drilling threaded insert of the present invention.

Fig. 7 is a front projection view of an embodiment of the self-drilling threaded insert of the present invention.

Fig. 8 is a sectional view of an embodiment of the self-drilling threaded insert of the present invention taken along the axis thereof.

Fig. 9 is a sectional view showing an embodiment of the self-drilling threaded insert of the present invention embedded into a drywall with a screw inserted therein and securing a partition board therebetween.

Fig. 10 is a perspective view of the front portion of an embodiment of the self-drilling threaded insert of the present invention.

### Preferred Embodiment of the Present Invention

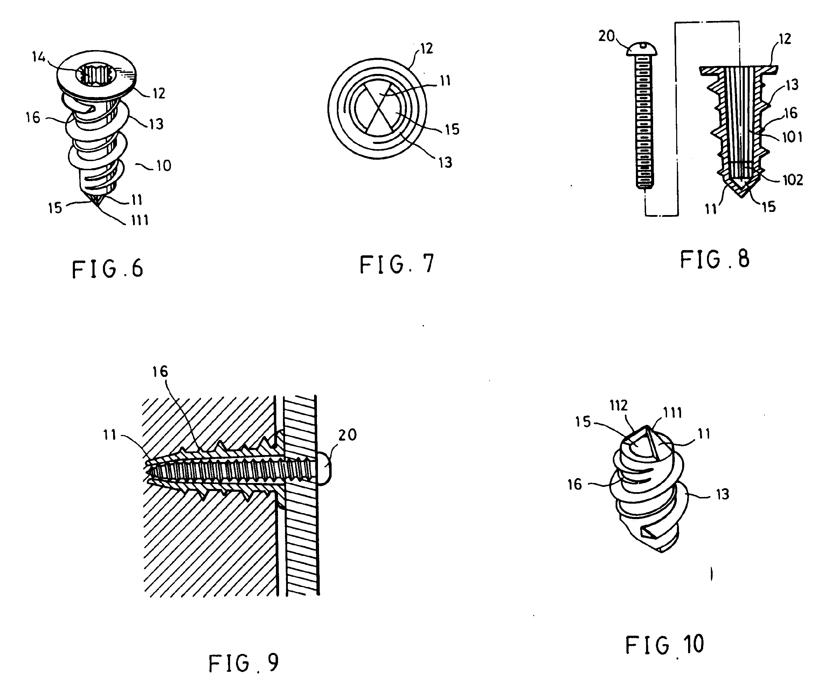

Referring to Fig. 6, the self-drilling insert of the present invention comprises a generally cylindrical main body with a flange 12 formed on the rear end thereof, a main thread 13 formed around the outer periphery of the main body, a low thread 16 formed around the outer periphery of the main body between main thread 13, a fluted and partially tapered central bore 14 formed through the axis of the main body, and a pair of drilling bits 11 formed on the front end of the main body.

Referring to Figs. 7 and 10, the pair of drilling bits 11 have the shape of congruent conical arc sectors and meet at a common apex to define a tip 111 at the extreme forward end of threaded insert 10. A pair of cutting edges 112 are formed along respective edges of each drilling bit 11.

The shapes and relative positions of the pair of drilling bits 11 can best be described in geometrical terms as a pair of opposed arc sectors of a 60 degree cone defined by a pair of planes intersecting the cone and including the axis thereof, having a lesser angular separation of 45 degrees with the pair of arc sectors contained therebetween.

As such, the pair of spaces defined between the pair of drilling bits 11 would have a profile appearance of a pair of opposed circular arcs, with each circular arc subtending a 135 degree angle corresponding to the greater angular separation or supplementary angle between the pair of intersecting planes, as is apparent from the front projection view of Fig. 7.

The base of each drilling bit 11 adjoins with the front end of the main body with the pair of spaces therebetween in communication with the front entrance 15 of bore 14.

Referring to Fig. 8, bore 14 has a rear taper section 101 adjacent to flange 12, and is at its widest thereat. Taper section 101 tapers and extends to a medial position between the midpoint of insert 10 and the front end thereof, to adjoin with a linear section 102 with a constant average width equal in cross-section with the adjoining narrow end of taper section 101.

Referring to Fig. 9, a threaded insert 10 has been drilled into a dry wall with the aid of a manual or powered screw driver. Main and low threads, 13 and 16, have also tapped into the drywall to secure the insert 10 thereon. Low thread 16 has a smaller crest diameter than that of main thread 13 and augments the pull-out resistance of the insert 10 from the drywall provided by main thread 13.

A screw 20 is shown inserted through bore 14 of insert 10, with a partition board secured therebetween.

Screw 20 taps into the fluted inner wall of linear section 102 of bore 14 to secure therein, and extends past the position of the pair of drilling bits 11. The tip of screw 20 causes the pair of drilling bits 11 to separate at tip 111 and expand laterally outwards, embedding into the drywall to further strengthen the bond of insert 10 therewith.

Note that in comparison to the first conventional type of threaded insert described in the background, the threaded insert 10 of the present invention has drilling bits 11 that are relatively short and with cutting edges 112 thereon that are close to the front entrance 15 of bore 14. As such, the drilling bits 11 of the threaded insert 10 of the present invention are much less prone to premature breakage or clogging during the drilling procedure.

Also as a result of the reduced length and shape of drilling bits 11, the threaded insert 10 is much less likely to divert from the intended direction of travel during drilling.

Moreover, the conventional threaded insert as described above restricts the length of a screw to be inserted therein to a relatively narrow range, as the bore of the conventional threaded insert tapers continuously from the flange to the front entrance thereof with a screw tapping only the portion therein near the front entrance. Thus a screw must be at least long enough to reach the portion of the bore near the front entrance. If the threaded insert were drilled into a wall with a thickness comparable with or greater than the length of the insert, an inserted screw considerably longer than the body of the insert would have difficulty in deflecting the long drill bit for the reason mentioned in the background.

The linear section 102 within bare 14, extending a distance to the rear of front entrance 15 of the threaded insert 10 of the present invention, enables a relatively shorter screw to be used. A relatively long screw could also be inserted into insert 10 as the tip of the screw would have no difficulty in displacing drilling bits 11 when insert 10 is embedded into a wall of a thickness greater than the length thereof.

The threaded insert of the present invention can be manufactured in a single step by die casting from an appropriate metal, with specific types of zinc-aluminum alloy being particularly well suited.

### Table of Drawing Numbers

- 1-: cylindrical body
- 2-: drilling bit
- 3-: flange
- 4-: thread
- 5-: fluted bore
- 6-: spoon shaped opening
- 7-: screw
- 8-: notches
- 101-: tapered section
- 102-: linear section
- 11-: drilling bit
- 111-: tip
- 112-: cutting edge
- 12-: flange
- 13-: high thread
- 14-: fluted bore
- 15-: front entrance
- 16-: low thread
- 20-: screw

## Claims

1. A self drilling threaded insert for use on drywall and the like comprising a generally cylindrical main body, a main thread (13) formed around the outer periphery of said main body, a bore (14) formed axially through said main body, a flange (12) formed on the rear end of said main body, and at least one drilling bit (11) formed on the front end of said main body, characterized in that
a low thread (16) formed around the outer periphery of said main body between said main thread (13) thereon, and having a crest diameter less than that of said main thread (13);
a fluted taper section (101) in said bore (14) and a fluted linear section (102) adjoining with the narrow end thereof in said bore (14), with said taper section (101) adjacent with said flange and being widest thereat;
at least two drilling bits (11) with the shape of conical arc sectors of a cone, meeting at a common apex to define a tip (111), with the bases thereof adjoining with the front end of said main body, and the spaces (15) defined therebetween in communication with said bore;
whereby, said threaded insert can be drilled into a drywall with said main thread (13) and said low thread (16) tapping into said drywall and said low thread (16) augmenting the pullout resistance of said threaded insert provided by said main thread (13); and
a screw (20) can be inserted into said bore (14) of said threaded insert with said screw (20) tapping into the fluted inner wall of said linear section (102) therein, to secure therewith; and
the tip of said screw can extend past the position of said drilling bits (11), causing them to separate at said tip (111) and expand laterally outwards, to further increase the pullout resistance of said threaded insert from said drywall.

2. The self drilling threaded insert according to claim 1, wherein said drilling bits (11) comprise a pair of congruent drilling bits (11) with a shape and relative position corresponding with a pair of opposed conical arc sectors of an acute angled cone defined by a pair of planes intersecting said cone and including the axis thereof, said planes having an acute angular separation with said opposed conical arc sectors contained therebetween.

## Patentansprüche

1. Eindrehbares Gewindeeinsatzteil zur Anwendung an Trockenwänden und ähnlichem, mit einem im allgemeinen zylindrischen Hauptkörper, einem um die äußere Umgebung des Hauptkörpers ausgebildeten Hauptgewinde (13), einer axial im Hauptkörper ausgebildeten Bohrung (14), einem an der hinteren Seite des Hauptkörpers geformten Flansch und zumindest einer an der vorderen Seite des Hauptkörpers ausgebildeten Eindrehspitze (11), gekennzeichnet durch
ein niedriges, am Außenumfang des Hauptkörpers zwischen dem Hauptgewindegang des Hauptgewindes (13) ausgebildetes Gewinde (16) mit einem Flankendurchmesser, der geringer als der des Hauptgewindes (13) ist;
einen gerieften, konisch zulaufenden Abschnitt (101) in der Bohrung (14) und einen gerieften, geraden Abschnitt (102), die in der Bohrung (14) am engen Ende des konisch zulaufenden Abschnittes 101 aneinandergrenzen, wobei der konisch zulaufende Abschnitt zum Flansch benachbart ist und dort am weitesten ist;
mindestens zwei Eindrehspitzen (11), die wie konische Bogensektoren eines Kegels geformt sind und die an einem gemein-samen Scheitelpunkt zusammenlaufen, um eine Spitze (111) zu bilden, wobei deren Grundflächen an das vordere Ende des Hauptkörpers angrenzen und dazwischen gebildete Räume (15) mit der Bohrung in Verbindung stehen;
wodurch das Gewindeeinsatzteil in eine Trockenwand eindrehbar ist, wobei das Hauptgewinde (13) und das niedrige Gewinde (16) sich in die Trockenwand schneiden und das niedrige Gewinde (16) den durch das Hauptgewinde (13) geschaffenen Ausreißwiderstand des Gewindeeinsatzteiles vergrößert; wobei
eine Schraube (20) in die Bohrung (14) des Gewindeeinsatzteiles einsetzbar ist, wobei die Schraube (20) in die geriefte Innenwandung des geraden Abschnittes (102) schneidet, um damit sicheren Halt zu finden; wobei
sich die Schraubenspitze über die Position der Eindrehspitzen (11) hinaus erstrecken kann und bewirkt, daß sie sich an der Spitze (111) teilen und sie sich seitlich nach außen hin erweitern, um den Ausreißwiderstand des Gewindeeinsatzteiles von der Trockenwand weiter zu erhöhen.

2. Eindrehbares Gewindeeinsatzteil nach Anspruch 1, dadurch gekennzeichnet, daß die Eindrehspitzen (11) zwei kongruente Eindrehspitzen (11) haben, deren Form und relative Lage zwei gegenüberliegenden konischen Bogensektoren eines spitzwinkligen Kegels entsprechen, die gebildet sind von zwei Ebenen, die den Kegel schneiden und dessen Achse beinhalten, wobei die Ebenen im spitzen Winkel zueinanderstehen und die einander gegenüberliegenden konisch zulaufenden Bogensektoren zwischen sich einschließen.

## Revendications

1. Insert fileté auto-perceur destiné à être utilisé en maçonnerie sèche et analogues, comprenant un corps principal généralement cylindrique, un filetage principal (13) formé autour de la périphérie externe du corps principal, un alésage (14) formé axialement dans ledit corps principal, une bride (12) formée sur l'extrémité arrière dudit corps principal, et au moins une mèche de perçage (11) formée à l'extrémité avant dudit corps principal, caractérisé en ce que
un filetage de faible hauteur (16) est formé autour de la périphérie externe dudit corps principal entre ledit filetage principal (13), et comportant un diamètre de crêtes inférieur à celui dudit filetage principal (13);
une section conique cannelée (101) dudit alésage (14) et une section linéaire cannelée (102) contiguë de son extrémité étroite dans ledit alésage (14), ladite section conique (101) étant adjacente à ladite bride et étant plus large à ce niveau;
au moins deux mèches de perçage (11) ayant la forme de secteurs d'arc coniques d'un cône, se rencontrant au niveau d'un sommet commun pour définir une pointe (111), leurs bases étant contiguës de l'extrémité avant dudit corps principal, et les espaces (15) définis entre elles étant en communication avec ledit alésage;
ce grâce à quoi ledit insert fileté peut être vissé et enfoncé dans une maçonnerie sèche, ledit filetage principal (13) et ledit filetage de faible hauteur (16) s'enfonçant par taraudage dans ladite maçonnerie sèche et ledit filetage de faible hauteur (16) augmentant la résistance à l'extraction dudit insert fileté fournie par ledit filetage principal (13); et
une vis (20) peut être insérée dans ledit alésage (14) dudit insert fileté, ladite vis (20) s'enfonçant par taraudage dans la paroi interne cannelée de ladite section linéaire (102) de l'alésage, pour être fixée dans ce dernier; et
la pointe de ladite vis peut s'étendre au-delà de la position desdites mèches de perçage (11), les amenant à se séparer au niveau de ladite pointe (111) et à s'étendre latéralement vers l'extérieur pour augmenter encore plus la résistance à l'extraction dudit insert fileté à partir de ladite maçonnerie sèche.

2. Insert fileté auto-perceur selon la revendication 1, dans lequel lesdites mèches de perçage (11) comprennent une paire de mèches de perçage mutuellement adaptées (11) avec une forme et une position relatives correspondant à une paire de secteurs d'arc coniques opposés d'un cône à angle aigu défini par une paire de plans coupant ledit cône et comprenant son axe, lesdits plans présentant une séparation angulaire aiguë avec lesdits secteurs d'arc coniques opposés contenus entre eux.
